# EUROPEAN PATENT APPLICATION

(11) **EP 4 660 935 A1**
(43) Date of publication of application: **10.12.2025**
(21) Application number: 23919649.6
(22) Date of filing: 31.01.2023
(51) Int. Cl.: G06T 7/00, G06T 7/285

(54) **TARGET DETERMINATION METHOD, PROGRAM, AND DEVICE**

(71) Applicant: FUJITSU LIMITED, Kawasaki-shi, Kanagawa 211-8588 (JP)
(72) Inventor: YANG, Fan, Kawasaki-shi, Kanagawa 211-8588 (JP); ODASHIMA, Shigeyuki, Kawasaki-shi, Kanagawa 211-8588 (JP); YOSHIDA, Shohei, Kawasaki-shi, Kanagawa 211-8588 (JP); IJUIN, Kazuya, Kawasaki-shi, Kanagawa 211-8588 (JP); IWASAKI, Mari, Kawasaki-shi, Kanagawa 211-8588 (JP)
(74) Representative: Hoffmann Eitle
(86) International application number: PCT/JP2023/003073
(87) International publication number: WO 2024/161506

(57) **Abstract**

A target determination device acquires information obtained by tracking, between frames, a two-dimensional position of a person estimated to be identical, the two-dimensional position being a two-dimensional position of the person in each frame of a video captured by each of plural cameras that captures a predetermined capturing range from plural different viewpoints, specifies a three-dimensional position of the person based on the acquired two-dimensional position of the person and camera parameters of each of the plural cameras, and determines, as a person as a recognition target, a person who first enters a start region (32) determined in advance as a three-dimensional region in which a person who performs a specific action is present at a start of the specific action on a basis of the specified three-dimensional position of the person.

## Description

### FIELD

The disclosed technology relates to a target determination method, a target determination program, and a target determination device.

### BACKGROUND

Conventionally, in order to analyze an action or the like of a person appearing in a video, a person is detected from each frame of the video and tracked between frames. For example, there has been proposed an image processing device that determines a detection range of an object in a focused frame image group on the basis of a position of the object corresponding to a three-dimensional shape model generated from a preceding frame image group and information regarding a moving direction of the object. This device associates an object of a preceding frame image group with an object of a focused frame image group positioned within a determined detection range.

### Prior Art Document

### Patent Literature

Patent Literature 1: Japanese Patent Application Laid-Open (JP-A) No. 2019-036346

### SUMMARY OF INVENTION

### Technical Problem

In a case in which a plurality of persons is detected from an image, it may be desired to track only a specific person. For example, in the case of a gymnastics competition, as a method of recognizing a skill performed by a player, a method of attaching a sensor to a player and using a detection value detected by the sensor is conceivable. However, wearing the sensor on the player may affect the performance of the player, and there is a problem. Accordingly, it is conceivable that the player is tracked from a video obtained by capturing the player performing the performance, and skills are recognized by image analysis. However, since persons other than players such as an assistant, a referee, and an audience are also detected from each frame of the video, the player needs to be determined from among the detected persons.

As a method of determining a specific person from among persons detected from an image, it is also conceivable to train a neural network model so as to detect a specific person from an image. However, for example, in a case in which a specific person performs complicated and various movements like a gymnast, or in a case in which a player and a person other than the player overlap on an image, it is difficult to train the neural network model so that the player can be accurately detected.

It is also conceivable to determine a specific person on the basis of a texture or a size specific to the specific person in the image. However, for example, in the case of a gymnastics competition, a person wearing the same uniform as the player may exist near the player as an assistant. In such a case, it may be difficult to determine the player on the basis of the texture or the size.

As one aspect, an object of the disclosed technology is to accurately determine a specific person from an image.

### Solution to Problem

As one aspect, the disclosed technology acquires information obtained by tracking, between frames, a two-dimensional position of a person estimated to be the same person, the two-dimensional position being a two-dimensional position of the person in each frame of a video captured by each of a plurality of cameras that capture a predetermined capturing range from a plurality of different viewpoints. The disclosed technology specifies a three-dimensional position of the person based on the acquired two-dimensional position of the person and camera parameters of each of the plurality of cameras. Then, the disclosed technology determines, as a person that is a recognition target, a person who first enters a start region determined in advance as a three-dimensional region in which a person who performs a specific action is present at a start of the specific action, based on the specified three-dimensional position of the person.

### Advantageous Effects of Invention

As one aspect, there is an effect that a specific target can be accurately determined from an image.

### BRIEF DESCRIPTION OF DRAWINGS

Fig. 1 is a schematic diagram illustrating connection between a target determination device and a camera according to the present embodiment.
Fig. 2 is a functional block diagram of a target determination device according to the present embodiment.
Fig. 3 is a diagram for describing an example of a two-dimensional position of a person.
Fig. 4 is a diagram illustrating an example of a data structure of information of a two-dimensional position.
Fig. 5 is a diagram for describing the need of determination of a person as a recognition target.
Fig. 6 is a diagram for describing a start region and a performance region.
Fig. 7 is a diagram illustrating an example of a start region and a performance region for a horizontal bar.
Fig. 8 is a diagram illustrating an example of a start region and a performance region for parallel bars.
Fig. 9 is a diagram illustrating an example of a start region and a performance region for uneven bars.
Fig. 10 is a diagram for describing determination of a start frame.
Fig. 11 is a diagram for describing a line of X=0 for the uneven bars.
Fig. 12 is a diagram for describing a line of X=0 for the parallel bars.
Fig. 13 is a diagram for describing a problem due to erroneous detection of illumination.
Fig. 14 is a diagram for describing a distance between a three-dimensional position of a person and an illumination.
Fig. 15 is a diagram illustrating an example of a target determination result.
Fig. 16 is a block diagram illustrating a schematic configuration of a computer that functions as a target determination device.
Fig. 17 is a flowchart illustrating an example of target determination processing.
Fig. 18 is a flowchart illustrating an example of determination processing in the case of the horizontal bar or parallel bars.
Fig. 19 is a diagram illustrating an example of an image with a 2D-BBOX in the case of the horizontal bar.
Fig. 20 is a diagram illustrating an example of an image with a 2D-BBOX in the case of the parallel bars.
Fig. 21 is a flowchart illustrating an example of determination processing in the case of the uneven bars.
Fig. 22 is a diagram illustrating an example of an image with a 2D-BBOX in the case of the uneven bars.
Fig. 23 is a diagram for describing an application example of the target determination device according to the present embodiment to a scoring system of a gymnastics competition.

### DESCRIPTION OF EMBODIMENTS

Hereinafter, an example of an embodiment according to the disclosed technology will be described with reference to the drawings.

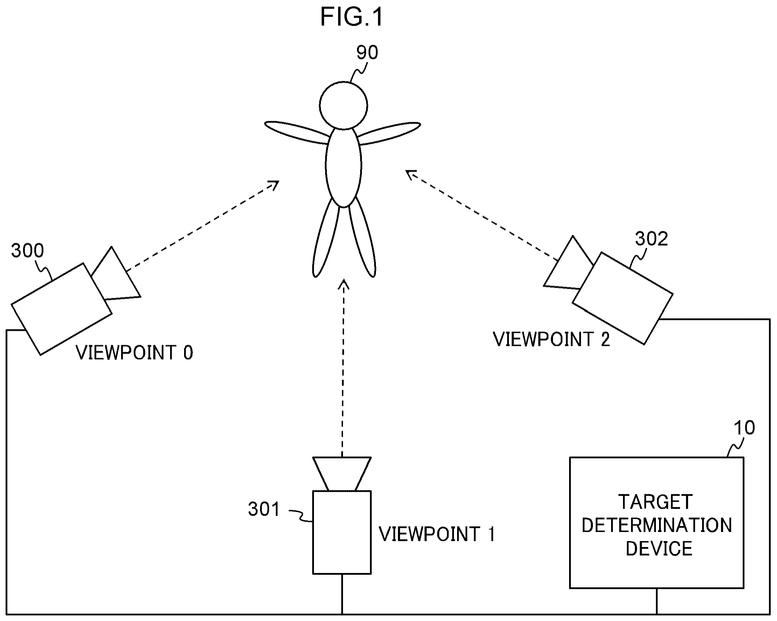

As illustrated in Fig. 1, a target determination device 10 according to the present embodiment is connected to each of a plurality of cameras 30n that captures a predetermined range including a person 90 from viewpoints n in different directions. In the example of Fig. 1, n = 0, 1, or 2, and a camera 300 that captures an image from viewpoint 0, a camera 301 that captures an image from viewpoint 1, and a camera 302 that captures an image from viewpoint 2 are connected to the target determination device 10. The number of cameras 30n connected to the target determination device 10 is not limited to the example of Fig. 1, and may be two or four or more.

The camera 30n is installed at an angle and at a position in which the person 90 falls within the image capturing range. Videos captured by the camera 30n are sequentially input to the target determination device 10. Synchronization signals are transmitted to the respective cameras 30n, and the videos captured by the respective cameras 30n are synchronized.

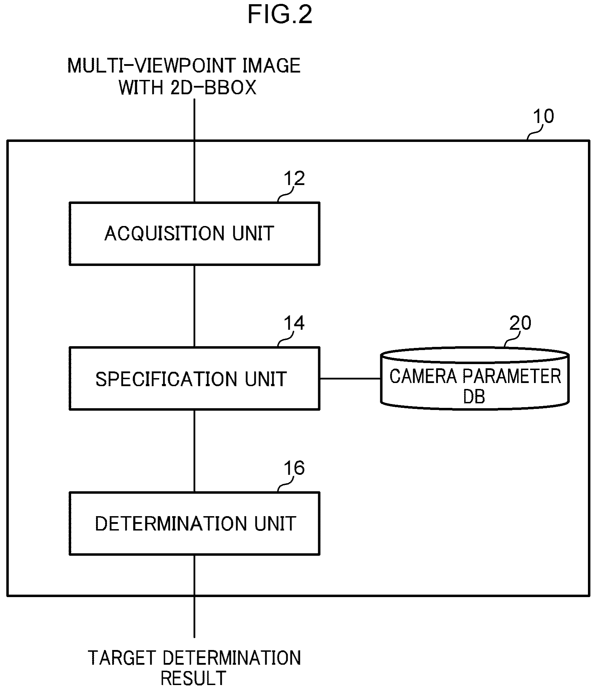

As illustrated in Fig. 2, the target determination device 10 according to the present embodiment functionally includes an acquisition unit 12, a specification unit 14, and a determination unit 16. A camera parameter database (DB) 20 is stored in a predetermined storage area of the target determination device 10. The camera parameter DB 20 stores internal parameters and external parameters of each camera 30n.

The acquisition unit 12 acquires a video captured by each of the plurality of cameras 30n, that is, a time-series multi-viewpoint image. Information on the two-dimensional position of the person 90 is assigned to the image 40n of each frame of the video. The information on the two-dimensional position of the person 90 may be a detection result of a detection model generated in advance by machine learning in order to detect the region of the person 90 from the image 40n. The detection result may be, for example, information for specifying a region surrounding the person 90 detected from each image 40n.

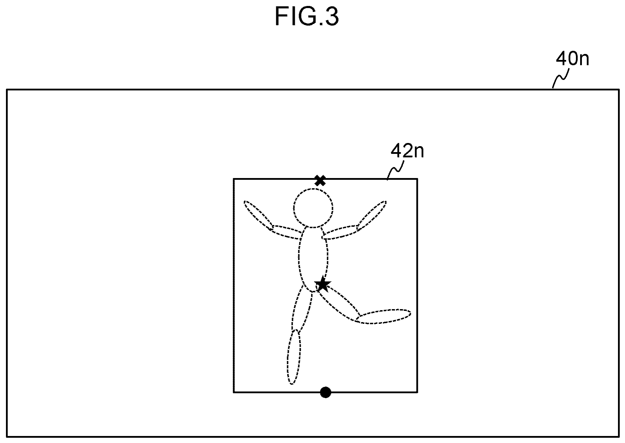

For example, as illustrated in Fig. 3, in a case in which the region of the person 90 is detected by a two-dimensional bounding box (hereinafter referred to as "2D-BBOX") 42n, information for specifying the 2D-BBOX 42n may be information of the two-dimensional position of the person 90. For example, coordinate values of a predetermined point of the 2D-BBOX 42n and a width and a height of the 2D-BBOX 42n may be set as the information of the two-dimensional position. The predetermined point may be, for example, a center point (star mark in Fig. 3) of the 2D-BBOX 42n, a midpoint of a base (black circles in Fig. 3, hereinafter referred to as "lowest point"), a midpoint of an upper side (cross circles in Fig. 3, hereinafter referred to as "highest point"), or the like. The coordinate values of four corners of the 2D-BBOX 42n may be used as the two-dimensional position information.

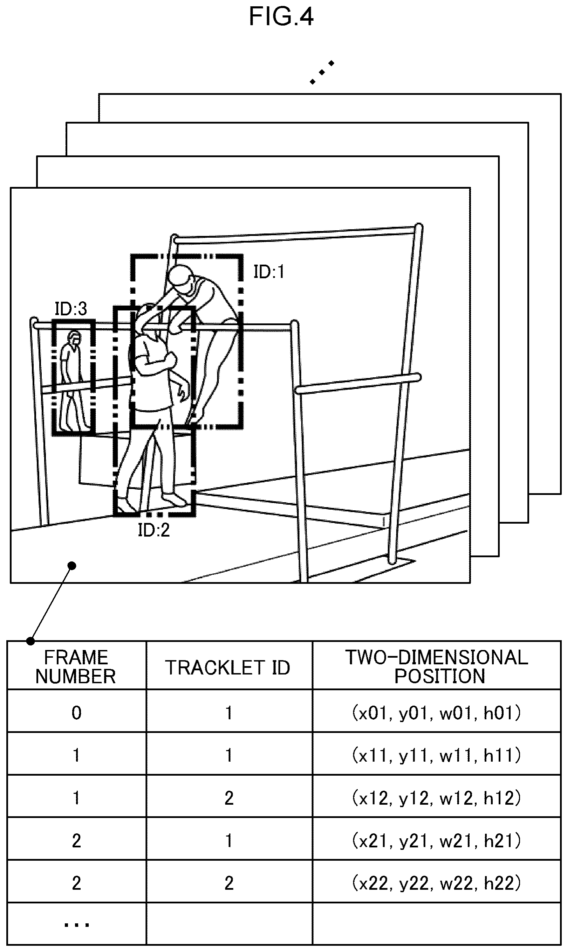

A tracklet ID, which is identification information of a tracklet (details will be described later), is assigned to the 2D-BBOX 42n every time it is newly detected from the image 40n. By tracking the 2D-BBOX 42n between frames, the same tracklet ID is assigned to the 2D-BBOX 42n estimated to indicate the same person. For example, as illustrated in the upper diagram of Fig. 4, it is assumed that 2D-BBOX 42n is detected from the image 40n of each frame. In this case, as illustrated in the lower diagram of Fig. 4, for each frame, the information of the two-dimensional position may be associated with the frame number and the tracklet ID of the 2D-BBOX 42n detected from the image 40n of the frame. Hereinafter, the multi-viewpoint image to which the information of the two-dimensional position is assigned as illustrated in the lower diagram of Fig. 4 is referred to as a "multi-viewpoint image with 2D-BBOX". A series of 2D-BBOX 42n to which the same tracklet ID is assigned in frames for a predetermined continuous period is referred to as a "tracklet".

In a case of acquiring the multi-viewpoint image to which the information on the two-dimensional position of the person 90 is not assigned, the acquisition unit 12 may acquire the information on the two-dimensional position of the person 90 using the above detection model.

The specification unit 14 specifies identifies the three-dimensional position of the person 90 based on the two-dimensional position of the person 90 acquired by the acquisition unit 12 and camera parameters of each of the plurality of cameras 30n. Specifically, the specification unit 14 acquires, from the camera parameter DB 20, the camera parameters of the camera 30n that has captured the image 40n in which the two-dimensional position of the person 90 is detected in the multi-viewpoint image. Then, the specification unit 14 specifies the three-dimensional position of the person 90 for each frame by triangulation based on the two-dimensional position of the person 90 in each image 40n, specifically, coordinate values of a predetermined point (highest point, center point, lowest point, and the like) of the 2D-BBOX 42n and the acquired camera parameters. The specification unit 14 specifies coordinate values of a three-dimensional point corresponding to a predetermined point of the 2D-BBOX 42n as the three-dimensional position. The specification unit 14 may specify a three-dimensional bounding box (hereinafter referred to as "3D-BBOX") corresponding to the 2D-BBOX 42n.

The determination unit 16 determines the person 90 as a recognition target based on the three-dimensional position of the person 90 specified by the specification unit 14. Hereinafter, the need of determining the person 90 as a recognition target will be described using a case in which a player in a gymnastics competition is the person 90 as a recognition target as an example.

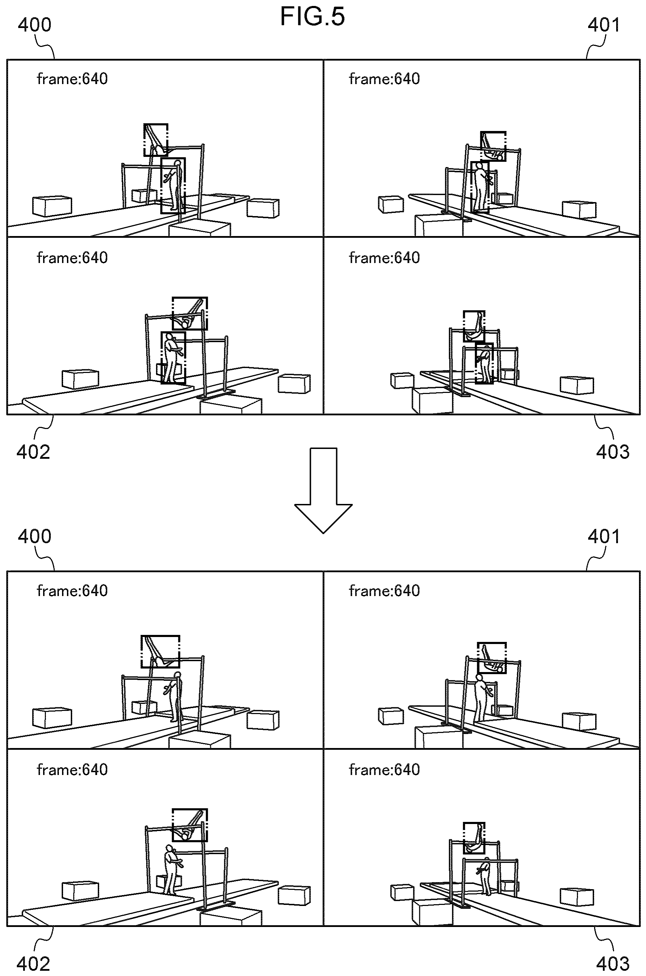

As illustrated in the upper diagram of Fig. 5, it is assumed that a 2D-BBOX 42n indicating each of the plurality of persons 90 is detected in a multi-viewpoint image of a certain frame (a frame with a frame number 640 in the example of Fig. 5). In the example of Fig. 5, a multi-viewpoint image is constituted by four-view images 400, 401, 402, and 403. In the case of a gymnastics competition, in addition to the player, there is a possibility that the person 90 of an assistant, a referee, an audience, another player who is not performing, or the like (hereinafter referred to as "assistant or the like") is detected. In the example in the upper diagram of Fig. 5, a 2D-BBOX 42n indicating a player performing an uneven bars performance and a 2D-BBOX 42n indicating an assistant assisting the player are detected. In order to perform recognition or the like of the skill performed by the player, the player as a recognition target needs to be determined from such a detection result as illustrated in the lower diagram of Fig. 5.

In the case of a gymnastics competition, there is a high possibility that it is a player who first enters the start region after there is a signal to start acting. Since the assistant or the like disturbs the player, there is a low possibility that the assistant or the like enters the start region before the player. Accordingly, the determination unit 16 determines the person 90 who first enters a start region 32 as the person 90 as a recognition target. The start region is a region determined in advance as a three-dimensional region in which a person (here, a gymnast) who performs a specific action (here, a performance in a gymnastics competition) is present at the start of the specific action.

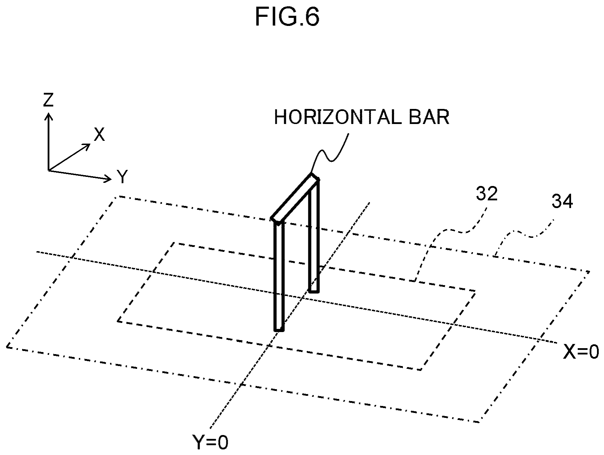

The start region only needs to be determined in advance according to a specific action. For example, in the case of a horizontal bar, which is one of events of the gymnastics competition, there is a case in which performance is started after hanging down on the horizontal bar and stopping once, a case in which performance is started by jumping on the horizontal bar in several steps of approach, and the like. In consideration of these cases, a start region 32 is set around the horizontal bar as illustrated in Fig. 6. In the gymnastics competition, the horizontal bar, the parallel bars, and the uneven bars are configured such that the assistant or the like is present on the floor surface at the start of performance, but the player is often present at a position higher than the floor surface. Accordingly, as the start region, a region that is a horizontal plane (XY plane) as indicated by a broken line in Fig. 6 and has a position in a height direction (Z direction) equal to or more than a predetermined value is set as the start region 32.

As illustrated in Fig. 6, a performance region 34 corresponding to the maximum range in which the acting is executed, for determining the end of a specific action by the person 90 as a recognition target, that is, the end of the acting, is also set. The performance region 34 is an example of an "action region" of the disclosed technology.

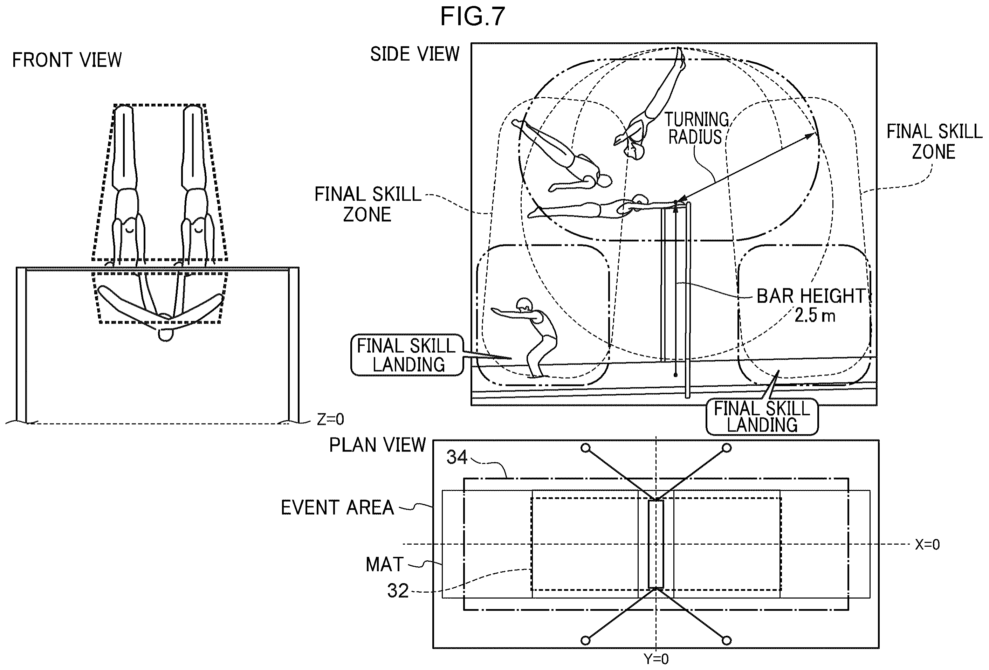

Figs. 7 to 9 illustrate examples of the start region 32 and the performance region 34 of each of a horizontal bar (HB), parallel bars (PB), and uneven bars (UB) (hereinafter, these are also collectively referred to as "bar events") in the gymnastics competition. The start region 32 is set around the arrangement of an instrument used in any of the bar events.

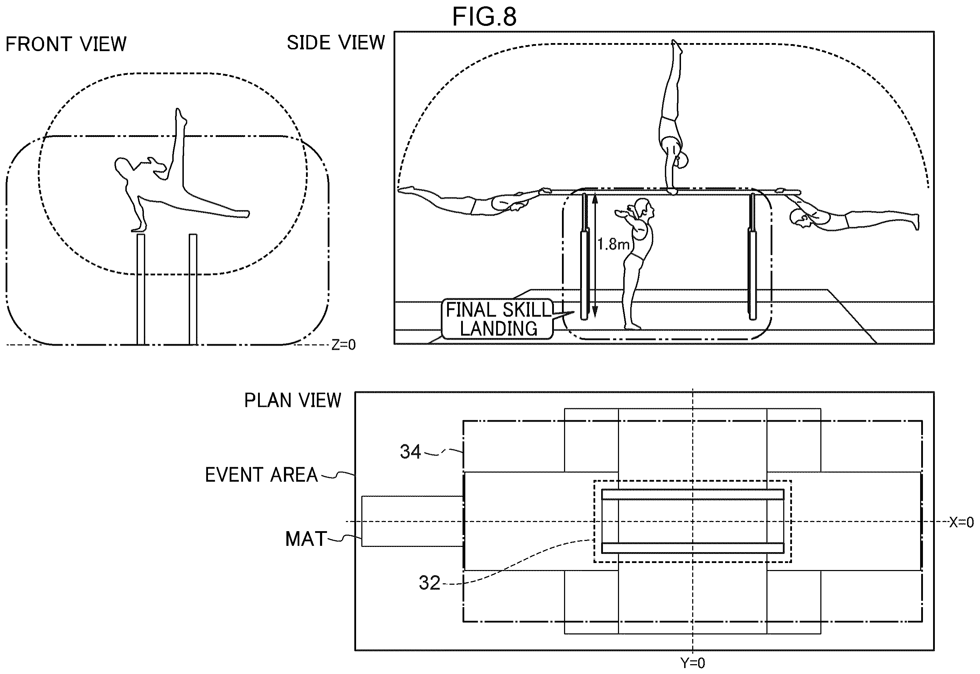

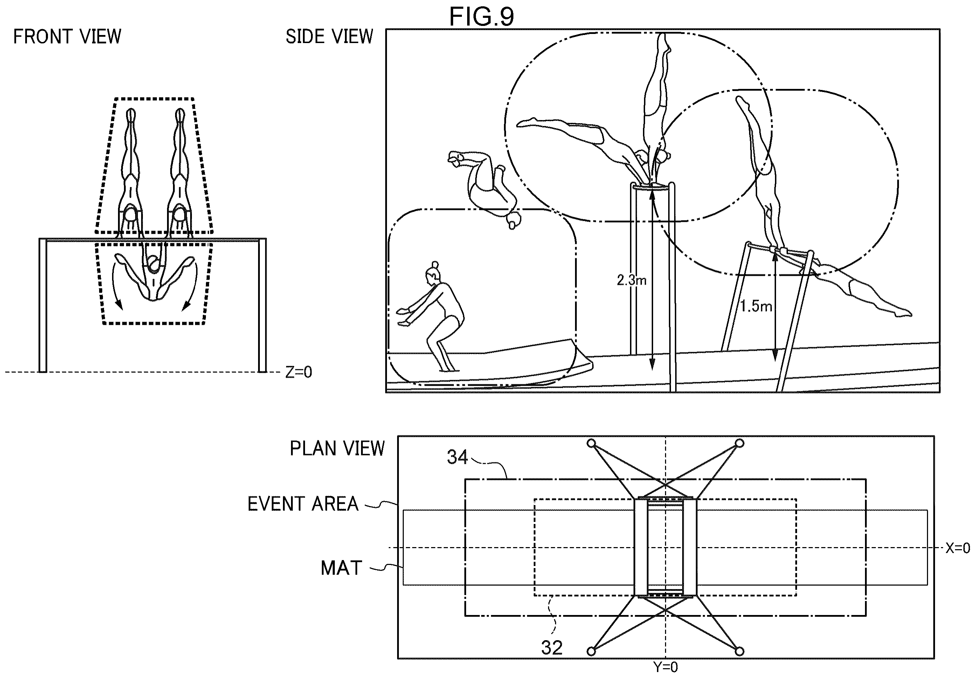

As illustrated in front view and side view in Fig. 7, the performance region 34 of the horizontal bar is assumed to include zones in which performance is performed, including a turning radius, an arrival point of a separation skill, a zone in which a final skill is performed, a landing point of a final skill, and the like, and is set to include these zones. As illustrated in a plan view in Fig. 7, the performance region 34 may be set in consideration of an area ("event area" in Fig. 7) divided for each event and arrangement of a mat or the like arranged around the instrument used in the event. The same applies to the parallel bars illustrated in Fig. 8 and the uneven bars illustrated in Fig. 9.

Specifically, the determination unit 16 determines, in order from the head frame of the video, whether or not the three-dimensional position of the person 90 specified for each frame is included in the start region 32 for the first time. More specifically, in a case in which an X coordinate value and a Y coordinate value of the three-dimensional position are on an XY plane of the start region 32 as illustrated in Fig. 6 and a Z coordinate value of the three-dimensional position exceeds a threshold TH1 in a height direction of the start region 32, the determination unit 16 determines that the tracklet has entered the start region 32.

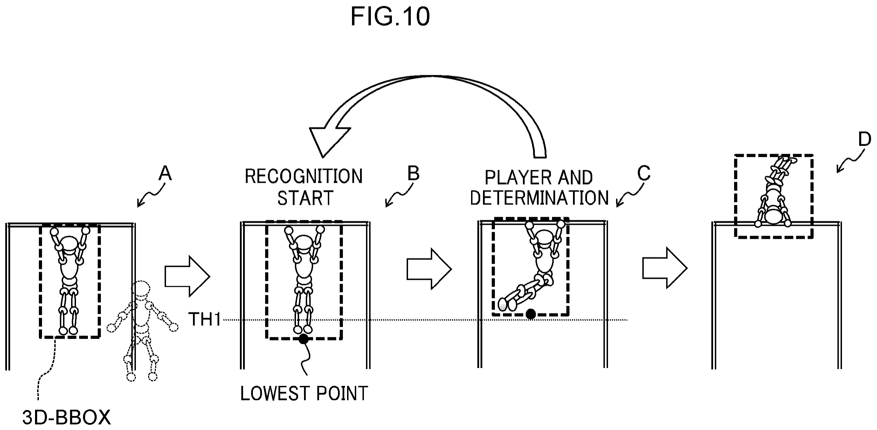

The higher the threshold TH1 in the height direction is, the easier it is to distinguish between the player and the assistant or the like. However, if the threshold TH1 is set too high, there may be a case in which a player is not determined from a frame to be regarded as an acting. For example, as illustrated in Fig. 10, it is assumed that there is a 3D-BBOX or a tracklet in which the position of the lowest point is specified as the three-dimensional position. In Fig. 10, A is a state after a player hangs on a horizontal bar with assistance of an assistant. B is a state in which the player hangs on the horizontal bar and temporarily stands still, and the lowest point does not exceed the threshold TH1 in the height direction, that is, does not enter the start region 32. C is a state in which a player starts acting from kicking, the lowest point exceeds the threshold TH1, and the player enters the start region 32. D is a state during performance.

In this case, at the stage C, the person 90 who has entered the start region 32 is determined as a player. However, it is desirable to recognize acting from the stage B. Accordingly, the determination unit 16 may determine a frame a predetermined number (for example, 60 frames) back from a frame in which the player is determined by entering the start region 32 as a frame in which the recognition of the acting is started (hereinafter referred to as a "start frame"). As a result, it is possible to achieve both setting the threshold TH1 in the height direction of the start region 32 high in order to distinguish the player from the assistant or the like, and appropriately determining the start time point of the action as a recognition target.

The determination unit 16 determines that the performance has ended when the player has left the performance region 34. That is, the determination unit 16 determines a frame in which the three-dimensional position of the player has exited the performance region 34 as a frame in which the recognition of the acting ends (hereinafter, referred to as an "end frame"). The determination unit 16 sets information from the start frame to the end frame of the tracklet of the person 90 determined as the player as a target determination result.

However, this target determination result is a valid result in a case in which an assumption that all the persons 90 indicated by the 2D-BBOX 42 constituting the tracklet are the same person, that is, an assumption that the tracking of the person 90 from the video during performance continues to be successful is established. However, in reality, there are cases in which the assumption that the tracking of the person 90 continues to be successful is not established. For example, in a situation in which a player and an assistant are close to each other during the performance, a tracking failure called an "ID switch" may occur in which a person different from the previous frame is tracked as the same person in the tracking of the person 90. Accordingly, during the performance of the bar event in the gymnastics competition, the determination unit 16 determines the player by focusing on the following characteristics possessed by the player.

The first characteristic is that the player is present in the air and the assistant or the like does not exist in the air. That is, the three-dimensional position of the player who is performing is usually higher than the three-dimensional position of another person such as an assistant. Accordingly, the determination unit 16 determines the person 90 having the highest coordinate value (Z coordinate value) in the height direction of the three-dimensional position of the person 90 as the player. Since it is determined that the player is present in the air, it is preferable to use a three-dimensional position specified from the lowest point of the 2D-BBOX 42n indicating the person 90 as the three-dimensional position of the person 90.

The second characteristic is that the player performs in a range determined in advance, specifically, at the center of the bar, in most of the period during performance. Accordingly, the determination unit 16 determines the person 90 whose distance between a line where a probability that the player is present during performance is high, that is, a line corresponding to the center of the bar and the three-dimensional position of the person 90 is less than a threshold TH2 as the player. In a case there is a plurality of persons 90 whose distance to the corresponding line is less than the threshold TH2, the determination unit 16 determines the person 90 whose distance to the line is the shortest as the player.

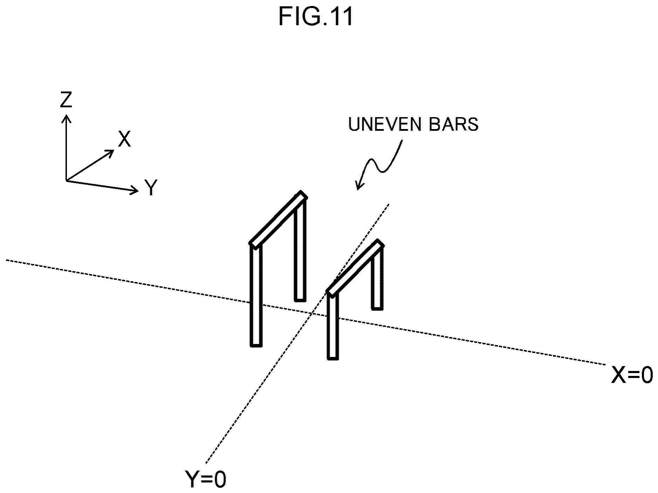

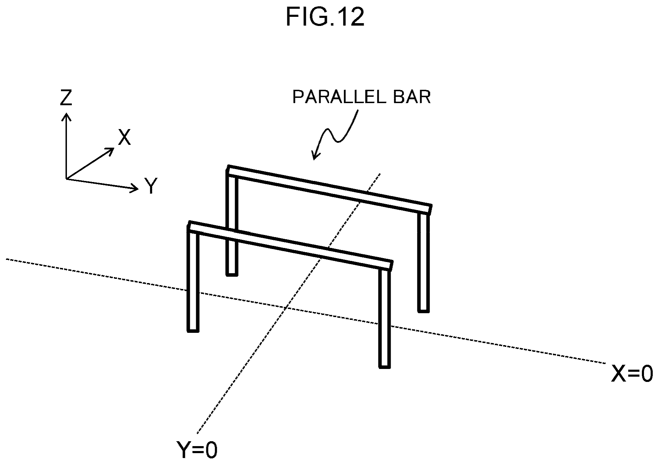

Specifically, in the case of a horizontal bar, as illustrated in Fig. 6, a direction orthogonal to the bar is defined as a Y axis, a center position of the bar is defined as X=0, a direction parallel to the bar is defined as an X axis, and a position of the bar is defined as Y=0. The uneven bars are similar to the case of the horizontal bar except that a center position of the two bars is set to Y=0 as illustrated in Fig. 11. In the case of the parallel bars, as illustrated in Fig. 12, a direction parallel to the bars is a Y axis, center positions of the two bars are X=0, a direction orthogonal to the bars is an X axis, and a center position of the bars is Y=0. In a case in which the three-dimensional space is defined in this manner, a line of X=0 is a line corresponding to the center of the bar. Therefore, the determination unit 16 determines the player with the X-coordinate value of the three-dimensional position of the person 90 as the distance to the line of X=0.

The third characteristic is that the player moves the fastest on the screen. For example, a skill such as a large wheel needs high-speed rotation, which is faster than walking motion of an assistant or the like. Accordingly, the determination unit 16 determines the person 90 whose speed of the player obtained from a change amount of the three-dimensional position between the frames is equal to or more than a threshold TH3 as the player. In a case there is a plurality of persons 90 whose speeds are equal to or higher than the threshold TH3, the determination unit 16 determines the person 90 whose speed at the three-dimensional position is the fastest as a player.

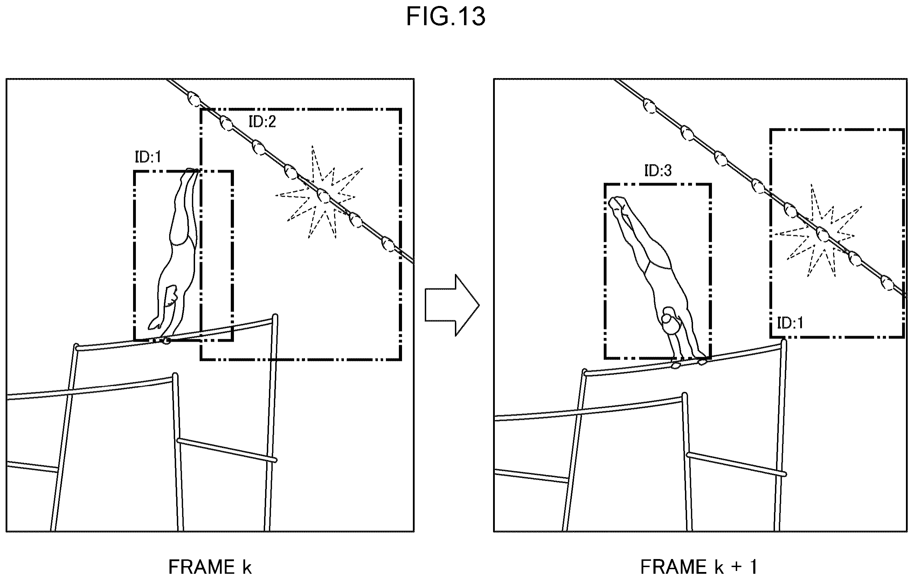

Here, as an example in which the tracking of the tracklet fails, there is a case in which the illumination of the competition venue is erroneously detected as a person 90 as illustrated in Fig. 13. In this case, when the person 90 having the highest three-dimensional position is determined as the player based on the first characteristic, the erroneously detected lighting is determined as the player.

Accordingly, the determination unit 16 may provide not only a lower limit but also an upper limit threshold as the height threshold, and determine the person 90 whose three-dimensional position is within a certain height range as a player. A player performing in a bar event is present within a certain range from the height of the bar. The lighting is present at a very high position (for example, the height is about 10 m) in the competition venue. Therefore, the upper limit of the height range is appropriately set so that the lighting or the like is not erroneously determined as a player.

As illustrated in Fig. 13, an ID switch may occur between the 2D-BBOX 42n of the person 90 and the 2D-BBOX 42n of the erroneously detected lighting. In the example of Fig. 13, in the frame k, a tracklet ID: 1 is assigned to the 2D-BBOX 42n of the person 90, and a tracklet ID: 2 is assigned to the 2D-BBOX 42n of the erroneously detected illumination. Then, in the next frame k + 1, the tracklet ID: 3 is assigned to the 2D-BBOX 42n of the person 90, and the tracklet ID: 1 is assigned to the 2D-BBOX 42n of the erroneously detected illumination. In such a case, since the apparent speed of the tracklet having the tracklet ID: 1 determined as a player is high, when the person 90 having a high speed is determined as a player based on the third characteristic, the erroneously detected illumination is determined as a player.

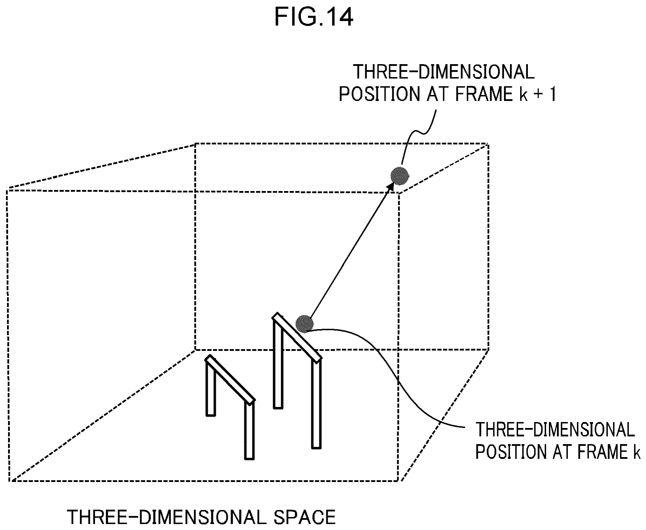

Accordingly, the determination unit 16 may provide not only a lower limit but also an upper limit threshold as the threshold of the speed, and determine the person 90 whose speed of the three-dimensional position is within a certain range as a player. In a case the ID switch is generated, even if the distance between the person 90 and the illumination on the image is a short distance, the distance between the three-dimensional position of the person 90 and the illumination is actually large as illustrated in Fig. 14. Thus, the speed of the three-dimensional position in a case in which the ID switch from the player to the lighting has occurred is a speed that a human is unable to reach (for example, about 15 m/s).

The upper limit of the speed range is appropriately set so as to exclude this. For example, the speed of the player for each frame is calculated using the tracklet in which the player is correctly detected, and the threshold of the upper limit of the speed range is determined from statistical information. More specifically, the speed of the three-dimensional position of the player between frames is calculated, a histogram with the speed as a bin and the number of frames as the number of votes is created, and the minimum speed at which the number of votes becomes zero is determined as the upper limit threshold.

In the gymnastics competition, the head position and the foot position of the person 90 are frequently reversed in the 2D-BBOX 42n. Thus, when the speed of the three-dimensional position corresponding to the highest point or the lowest point of the 2D-BBOX 42n is calculated, there are cases in which the speed for the same position of the human body has not been calculated. Therefore, when calculating the speed of the three-dimensional position, it is sufficient if the speed of the three-dimensional position corresponding to the center point of the 2D-BBOX 42n is calculated.

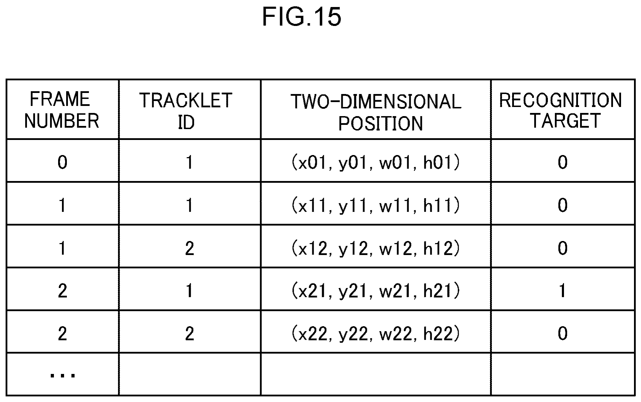

For example, as illustrated in Fig. 15, the determination unit 16 may record the target determination result that is the determination result of the player by setting a flag indicating "recognition target" in the information of the two-dimensional position assigned to the multi-viewpoint image. In the example of Fig. 15, for each frame, a flag ("1" in the example of Fig. 15) is set to indicate that it is the recognition target, that is, the player, in association with the tracklet ID of the tracklet determined as the player. In the other tracklet IDs, a flag ("0" in the example of Fig. 15) indicating that the tracklet ID is not a recognition target is set. When the determination for each frame from the start frame to the end frame is completed, the determination unit 16 outputs the target determination result.

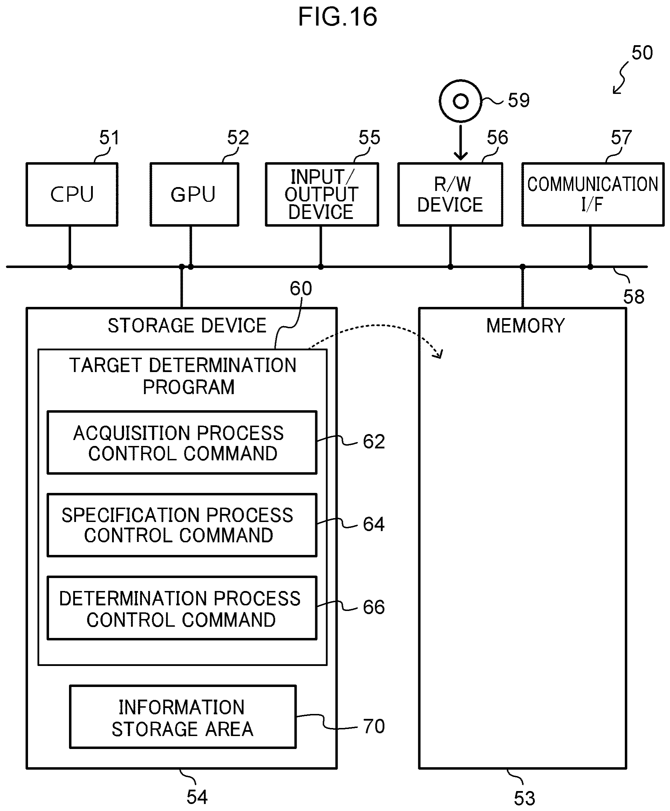

The target determination device 10 may be implemented by, for example, a computer 50 illustrated in Fig. 16. The computer 50 includes a central processing unit (CPU) 51, a graphics processing unit (GPU) 52, a memory 53 as a temporary storage area, and a nonvolatile storage device 54. The computer 50 includes an input/output device 55 such as an input device and a display device, and a read/write (R/W) device 56 that controls reading and writing of data with respect to the storage medium 59. The computer 50 further includes a communication interface (I/F) 57 connected to a network such as the Internet. The CPU 51, the GPU 52, the memory 53, the storage device 54, the input/output device 55, the R/W device 56, and the communication I/F 57 are connected to each other via a bus 58.

The storage device 54 is, for example, a hard disk drive (HDD), a solid state drive (SSD), a flash memory, or the like. The storage device 54 as a storage medium stores a target determination program 60 for causing the computer 50 to function as the target determination device 10. The target determination program 60 includes an acquisition process control command 62, a specification process control command 64, and a determination process control command 66. The storage device 54 has an information storage area 70 in which information constituting the camera parameter DB 20 is stored.

The CPU 51 reads the target determination program 60 from the storage device 54, develops the program in the memory 53, and sequentially executes the control commands included in the target determination program 60. The CPU 51 operates as the acquisition unit 12 illustrated in Fig. 2 by executing the acquisition process control command 62. The CPU 51 operates as the specification unit 14 illustrated in Fig. 2 by executing the specification process control command 64. The CPU 51 executes the determination process control command 66 to operate as the determination unit 16 illustrated in Fig. 2. The CPU 51 reads information from the information storage area 70 and develops the camera parameter DB 20 in the memory 53. As a result, the computer 50 that has executed the target determination program 60 functions as the target determination device 10. The CPU 51 that executes the program is hardware. A part of the program may be executed by the GPU 62.

The function implemented by the target determination program 60 may be implemented by, for example, a semiconductor integrated circuit, more specifically, an application specific integrated circuit (ASIC), a field-programmable gate array (FPGA), or the like.

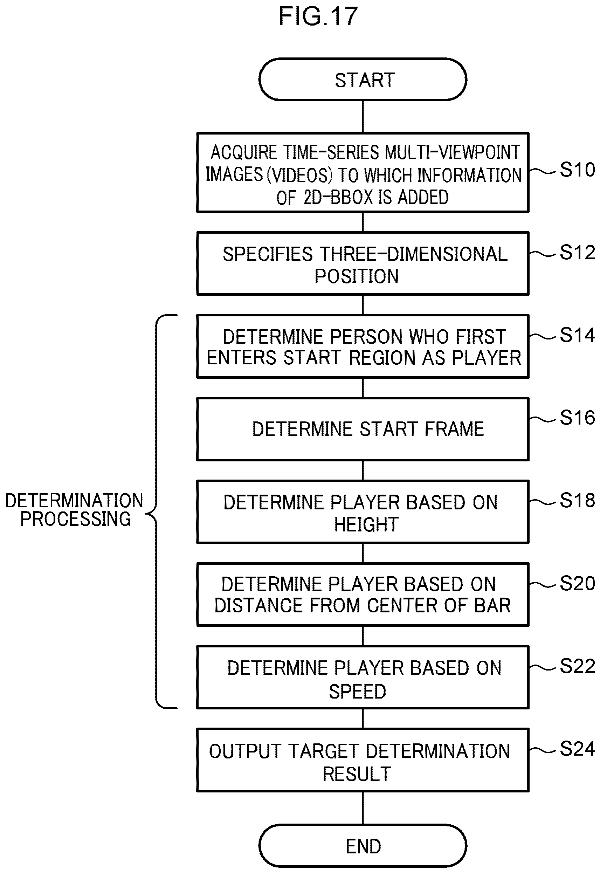

Next, an operation of the target determination device 10 according to the present embodiment will be described. When the multi-viewpoint image with the 2D-BBOX is input to the target determination device 10 and the determination of the specific person 90 (here, a gymnast) is instructed, the target determination device 10 executes the target determination processing illustrated in Fig. 17. The target determination processing is an example of a target determination method of the disclosed technology.

In step S10, the acquisition unit 12 acquires time-series multi-viewpoint images (videos) to which the information of the 2D-BBOX 42n indicating the region of the person 90 is added. Next, in step S12, the specification unit 14 specifies the three-dimensional position of the predetermined point of the person 90 by triangulation based on the coordinate values of the predetermined point (highest point, center point, lowest point, or the like) of the 2D-BBOX 42n and the camera parameters of each camera 30n.

Next, in step S14, the person 90 who first enters the start region 32 is determined as a player who is the person 90 as a recognition target based on the specified three-dimensional position of the person 90. Next, in step S16, the determination unit 16 determines a frame a predetermined number (for example, 60 frames) back from the frame in which the player is determined by entering the start region 32 as the start frame in which the recognition of the acting is started.

The determination unit 16 determines the player by the following steps S18 to S22 for each frame from the start frame to the end frame at which the recognition of the acting ends, which is the frame when the player has left the performance region 34.

Specifically, in step S18, the determination unit 16 determines the person 90 having the highest Z coordinate value of the three-dimensional position of the person 90 within the predetermined range as the player. Next, in step S20, among the persons 90 whose distance between a line where a probability that a player is present during performance is high, that is, a line corresponding to the center of the bar and the three-dimensional position of the person 90 is less than the threshold TH2, the person 90 whose distance to the line is the shortest is determined as a player. Next, in step S22, the determination unit 16 determines the person 90 whose speed of the three-dimensional position is the fastest within the predetermined range as a player.

Next, in step S24, the determination unit 16 outputs the target determination result in which the determination results of steps S14 and S18 to S22 are recorded, and the target determination processing ends.

In the determination processing including the processing of steps S14 to S22 of the target determination processing, all the player determinations of steps S14 and S18 to S22 need not be executed. Any one of the determinations may be made, or at least two of the determinations may be made in combination. The threshold set in each step, which three-dimensional position of a predetermined point (highest point, center point, lowest point, or the like) the three-dimensional position used for determination is, or the like only need to be appropriately set according to the event performed by the player.

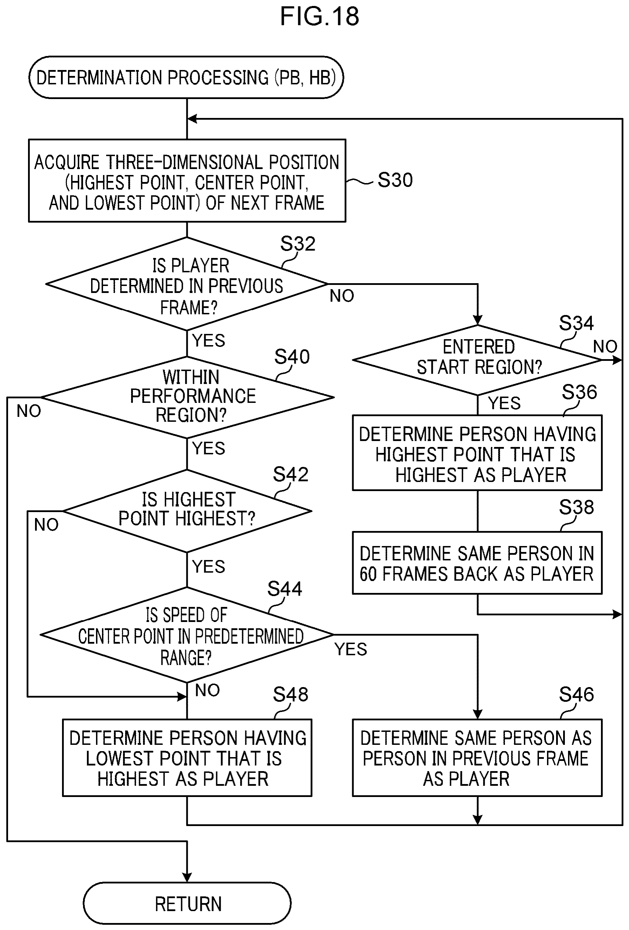

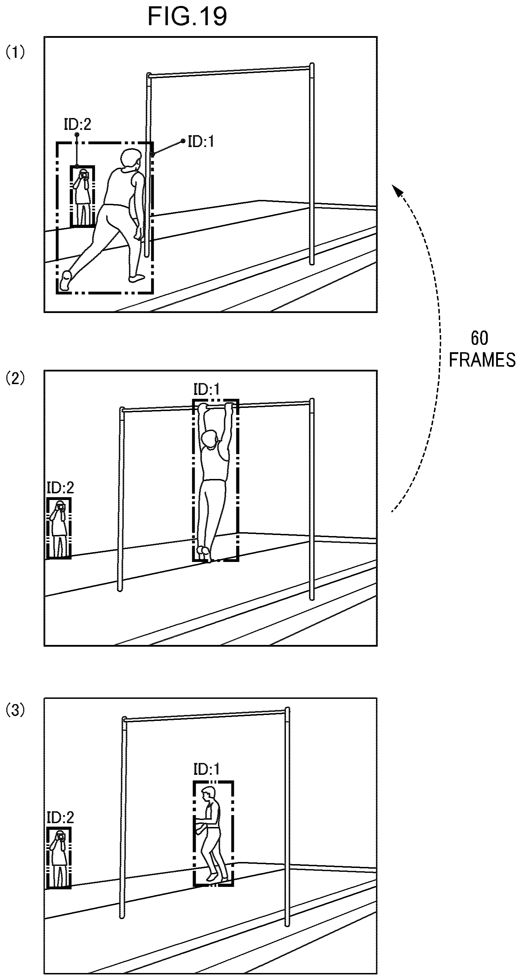

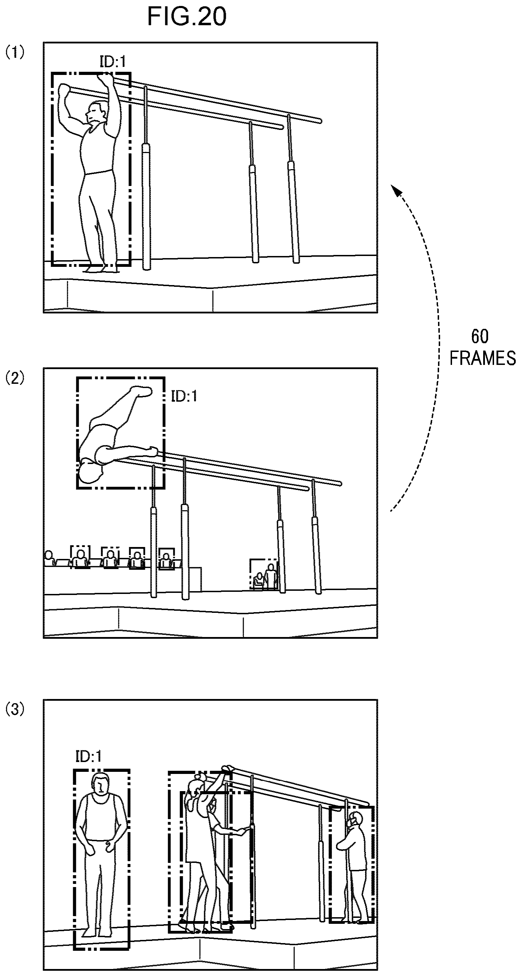

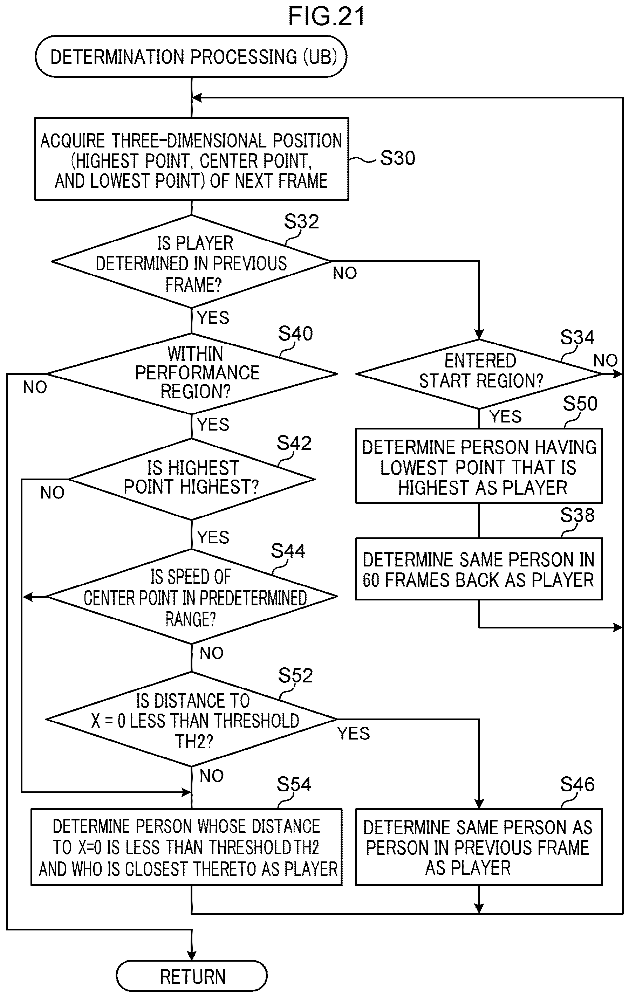

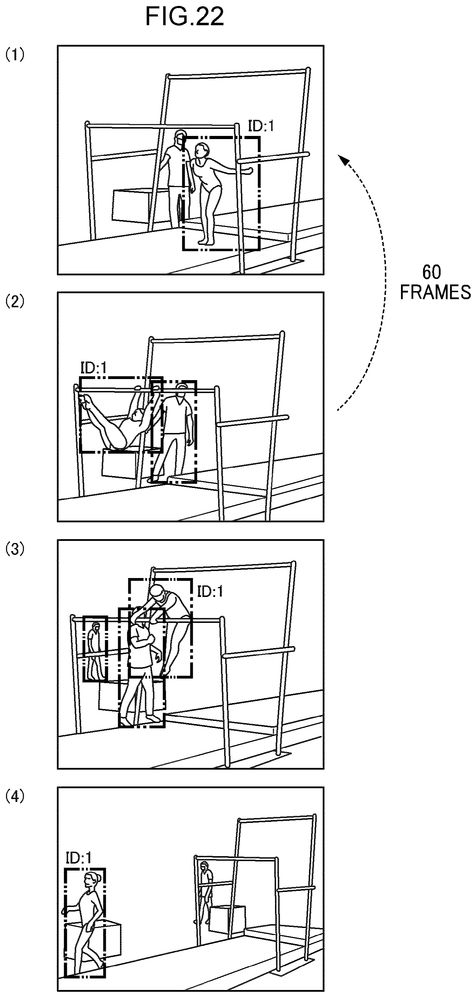

Hereinafter, an example in which the determination processing is further embodied will be described. Fig. 18 is a flowchart illustrating an example of the determination processing in the case of the horizontal bar or the parallel bars, and Fig. 21 is a flowchart illustrating an example of the determination processing in the case of uneven bars. Furthermore, Fig. 19 is an example of an image with 2D-BBOX in the case of a horizontal bar, Fig. 20 is an example of an image with 2D-BBOX in the case of parallel bars, and Fig. 22 is an example of an image with 2D-BBOX in the case of uneven bars.

The determination processing in the case of the horizontal bar illustrated in Fig. 18 will be described with reference to Fig. 19.

In step S30, the determination unit 16 acquires the three-dimensional position of the person 90 specified from the highest point, the center point, and the lowest point of 2D-BBOX 42n of the next frame in order from the head frame of the video acquired in step S10 of the target determination processing (Fig. 17).

Next, in step S32, the determination unit 16 determines whether or not a tracklet ID in which a flag "1" indicating a recognition target is set is present for the previous frame, thereby determining whether or not a player is determined in the previous frame. In a case in which a player has been determined, the process proceeds to step S40, and in a case in which a player has not been determined, the process proceeds to step S34.

In step S34, the determination unit 16 determines whether or not there is a person 90 who has entered the start region 32 based on the three-dimensional position. For example, in the case of (1) of Fig. 19, since all the persons 90 exist on the floor surface and the height of the three-dimensional position does not exceed the threshold TH1 in the height direction of the start region 32, it is determined that the person 90 who has entered the start region 32 does not exist. In (2) of Fig. 19, in a case in which the height of the three-dimensional position (for example, the lowest point) of the person 90 with the tracklet ID: 1 exceeds the threshold TH1, it is determined that the person 90 with the tracklet ID: 1 has entered the start region 32. In a case in which the person 90 who has entered the start region 32 is present, the process proceeds to step S36, and in a case in which the person is not present, the process returns to step S30.

In step S36, the determination unit 16 determines the person 90 having the highest point that is the highest among the persons 90 who have entered the start region as a player, and sets the flag "1" indicating the recognition target in association with the tracklet ID indicating the person 90. In the example of Fig. 19, the flag "1" is set in association with the frame number of the frame of (2) and the tracklet ID: 1.

Next, in step S38, as illustrated in (1) and (2) of Fig. 19, the determination unit 16 specifies a frame a predetermined number (for example, 60 frames) back from the current frame as the start frame. Then, the determination unit 16 determines the same person as the person 90 determined as a player in step S36 as a player in each frame from the start frame to the current frame. That is, the determination unit 16 sets the flag "1" in association with the same tracklet ID as the tracklet ID to which the flag "1" is set in step S36, and returns to step S30. In the example of Fig. 19, the flag "1" is set in association with the frame number of each frame up to immediately before (1) to (2) and the tracklet ID: 1.

In step S40, the determination unit 16 determines whether or not the three-dimensional position of the person 90 determined to be a player in the previous frame, that is, the person 90 indicated by the tracklet with the tracklet ID for which the flag "1" is set is present in the performance region 34. If it is present in the performance region 34, the process proceeds to step S42.

In step S42, the determination unit 16 determines whether or not the person 90 having the highest three-dimensional position of the highest point among the persons 90 detected from the current frame is the player selected in the previous frame. In a case the highest point of the player is the highest, the process proceeds to step S44, and in a case in which the highest point of the other person 90 is higher, the process proceeds to step S48.

In step S44, the determination unit 16 determines whether or not the speed of the center point of the player is within a predetermined range. In a case the speed is within the predetermined range, the process proceeds to step S46, and in a case in which the speed is outside the predetermined range, the process proceeds to step S48.

In step S46, the determination unit 16 determines the same person as the person 90 determined as a player in the previous frame as a player, and sets the flag "1" in association with the tracklet ID indicating the person 90. In step S48, the determination unit 16 determines a person having the highest three-dimensional position of the lowest point among the persons 90 detected from the current frame as a player, and sets the flag "1" in association with the tracklet ID indicating the person 90.

As illustrated in (3) of Fig. 19, when the player exits the performance region 34, a negative determination is made in step S40, and the processing returns to the target determination processing (Fig. 17).

In the case of the parallel bars, determination processing (Fig. 18) similar to that in the case of the horizontal bar is executed. For example, in (1) of Fig. 20, the person 90 has not entered the start region yet (negative determination in step S34). Then, in (2) of Fig. 20, when the person with the tracklet ID: 1 starts acting, the person enters the start region (positive determination in step S34), and is determined as a player (step S36). Accordingly, for example, a start frame is determined 60 frames back from (2). In (3) of Fig. 20, when the player leaves the performance region 34 (negative determination in step S40), the determination processing ends. In Fig. 20, the tracklet ID is written only for the tracklet indicating the person 90 determined as a player. The same applies to Fig. 22 described later.

In step S38, the determinations in steps S42 to S48 may also be performed for each frame from the start frame to the current frame.

Next, determination processing in the case of uneven bars illustrated in Fig. 21 will be described with reference to Fig. 22. In the determination process illustrated in Fig. 21, processes similar to the determination processing in the case of the horizontal bar or the parallel bars illustrated in Fig. 18 are denoted by the same step numbers, and a detailed description thereof is omitted.

When an affirmative determination is made in step S34, in the next step S50, the determination unit 16 determines the person 90 having the highest lowest point among the persons 90 who have entered the start region as a player, and sets a flag "1" indicating a recognition target in association with the tracklet ID indicating the person 90. In the case of uneven bars, in a case in which performance is started from a low bar, or the like, the highest point of the player immediately after the start of performance may be lower than the highest point of an assistant or the like. Thus, it is suitable to determine the player using the height of the lowest point instead of the highest point.

In addition, when an affirmative determination is made in step S44, the process proceeds to step S52, and the determination unit 16 determines whether or not the distance between the three-dimensional position of the player and the line of X=0 is less than the threshold TH2. In a case in which the distance is less than the threshold TH2, the process proceeds to step S46, and in a case in which the distance is equal to or more than the threshold TH2, the process proceeds to step S54. In step S54, the determination unit 16 determines the person 90 whose distance to the line of X=0 is less than the threshold TH2 and who is the closest to the line of X=0 as a player, and sets the flag "1" in association with the tracklet ID indicating the person 90.

In the case of the uneven bars, as illustrated in (3) of Fig. 22, the assistant is often in proximity to the player, and there are cases in which the player is not accurately determined only by the determination based on the height. Thus, particularly in the uneven bars, the determination using the distance to the line of X=0, which is the line corresponding to the center of the bar, is effective.

As described above, the target determination device according to the present embodiment acquires information obtained by tracking, between frames, the two-dimensional position of the person estimated to be the same, which is the two-dimensional position of the person in each frame of the video that is the time-series multi-viewpoint image. The target determination device specifies the three-dimensional position of the person based on the acquired two-dimensional position of the person and the camera parameters of each of the plurality of cameras. Then, the target determination device determines, as a person as a recognition target, a person who first enters a start region determined in advance as a three-dimensional region in which a person who performs a specific action is present at a start of the specific action based on the specified three-dimensional position of the person. This makes it possible to accurately determine a specific target from the image.

The target determination device may execute at least one of determination based on the height of the three-dimensional position of the person, determination based on the distance from the specific line, and determination based on the speed of the three-dimensional position of the person, in addition to or independently of the determination based on the entry into the start region. These determinations focus on the characteristics of a gymnast, particularly a player performing in a bar event, and it is possible to accurately determine a player performing a bar event.

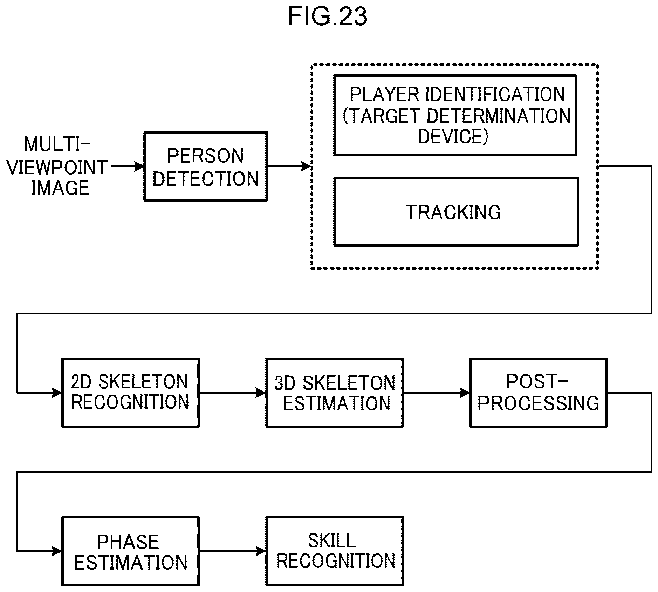

The target determining device according to the above embodiment can be applied to, for example, a scoring system of a gymnastics competition. Here, an outline of a processing example of the scoring system of the gymnastics competition will be described with reference to Fig. 23.

When the multi-viewpoint image is input, the scoring system detects the region of the person from each image included in the multi-viewpoint image. The scoring system tracks a player by associating a region indicating a same player among plural frames of the single viewpoint in time-series multi-viewpoint images, determines whether a person indicated by the detected region is a player or other than a player, specifies a region indicating a player, and associates a tracked player among plural viewpoints, that is, among images. The scoring system recognizes two-dimensional skeleton information of the player from each of the tracked series of images using a recognition model or the like. The scoring system estimates three-dimensional skeleton information from the two-dimensional skeleton information using the camera parameters. Then, the scoring system performs post-processing such as smoothing on the time-series three-dimensional skeleton information, estimates the phase (break) of the performance, and then recognizes the skill. In the player specification processing, the target determination device according to the embodiment can be applied.

Note that the disclosed technology is not limited to a case in which the recognition target is a gymnast, and can be applied to various people such as players in other competitions and general pedestrians as the recognition target.

In the above embodiment, the target determination program is stored (installed) in advance in the storage device, but the present invention is not limited thereto. The program according to the disclosed technology may be provided in a form stored in a storage medium such as a CD-ROM, a DVD-ROM, or a USB memory.

### Description of Reference Numerals

- 10: Target determination device
- 12: Acquisition unit

- 14: Specification unit
- 16: Determination unit
- 20: Camera parameter DB
- 30n: Camera
- 32: Start region
- 34: Performance region
- 40n: Image
- 42n: 2D-BBOX
- 50: Computer
- 51: CPU
- 52: GPU
- 53: Memory
- 54: Storage device
- 55: Input/output device
- 56: R/W device
- 57: Communication I/F
- 58: Bus
- 59: Storage medium
- 60: Target determination program
- 62: Acquisition process control command
- 64: Specification process control command
- 66: Determination process control command
- 70: Information storage area
- 90: Person

## Claims

1. A target determination method executable by a computer to perform a process, the process comprising:
acquiring information obtained by tracking, between frames, a two-dimensional position of a person estimated to be the same person, the two-dimensional position being a two-dimensional position of the person in each frame of a video captured by each of a plurality of cameras that capture a predetermined capturing range from a plurality of different viewpoints;
specifying a three-dimensional position of the person based on the acquired two-dimensional position of the person and camera parameters of each of the plurality of cameras; and
determining, as a person that is a recognition target, a person who first enters a start region, determined in advance as a three-dimensional region in which a person who performs a specific action is present at a start of the specific action, based on the specified three-dimensional position of the person.

2. The target determination method according to claim 1, wherein the start region is at a height equal to or more than a predetermined value from a floor surface.

3. The target determination method according to claim 1 or 2, wherein a person for which the specified three-dimensional position of the person is present within a range of a height determined in advance according to the specific action, during the specific action, is determined to be the person that is the recognition target.

4. The target determination method according to claim 3, wherein, in a case in which a plurality of persons are present in the height range determined in advance, a person for which the three-dimensional position of the person is highest among the plurality of persons is determined to be the person that is the recognition target.

5. The target determination method according to claim 1 or 2, wherein a person for which a distance between a line at which there is a high probability that the person who performs the specific action is present during the specific action, and the specified three-dimensional position of the person, is less than a predetermined value, is determined to be the person that is the recognition target.

6. The target determination method according to claim 5, wherein, in a case in which a plurality of persons are present for which the distance is less than the predetermined value, a person for which the distance is smallest is determined to be the person that is the recognition target.

7. The target determination method according to claim 1 or 2, wherein a person for which a speed of the three-dimensional position of the person, corresponding to a change in each of the two-dimensional positions of the person in a plurality of frames, is within a speed range determined in advance is determined to be the person that is the recognition target.

8. The target determination method according to claim 7, wherein, in a case in which a plurality of persons are present for which the speed is within the speed range determined in advance, a person for which the speed is fastest is determined to be the person that is the recognition target.

9. The target determination method according to claim 1 or 2, wherein a frame that is a predetermined number of times before a frame corresponding to a time point at which the person that is the recognition target first enters the start region, is determined as a start time point of the specific action.

10. The target determination method according to claim 1 or 2, wherein, in a case in which the person that is the recognition target has exited from an action region determined in advance as a maximum range in which the specific action is executed, termination of the specific action is determined.

11. The target determination method according to claim 1 or 2, wherein the specific action is a performance on a horizontal bar, parallel bars, or uneven bars in a gymnastics competition, and the person that is the recognition target is a participant in the gymnastics competition.

12. A target determination method executable by a computer to perform a process, the process comprising:
acquiring a detection result obtained by tracking, between frames, a two-dimensional position of a person estimated to be the same person, the two-dimensional position being a two-dimensional position of the person in each frame of a moving image captured by each of a plurality of cameras that capture a predetermined capturing range from a plurality of different viewpoints;
specifying a three-dimensional position of the person based on the two-dimensional position of the person indicated by the detection result and camera parameters of each of the plurality of cameras; and
determining, as a person that is a recognition target, a person for which the specified three-dimensional position of the person is present within a range of a height determined in advance according to the specific action, during the specific action.

13. A target determination method executable by a computer to perform a process, the process comprising:
acquiring a detection result obtained by tracking, between frames, a two-dimensional position of a person estimated to be the same person, the two-dimensional position being a two-dimensional position of the person in each frame of a video captured by each of a plurality of cameras that capture a predetermined capturing range from a plurality of different viewpoints;
specifying a three-dimensional position of the person based on the two-dimensional position of the person indicated by the detection result and camera parameters of each of the plurality of cameras; and
determining, as a person that is a recognition target, a person for which a distance between a line at which there is a high probability that the person who performs the specific action is present during the specific action, and the specified three-dimensional position of the person, is less than a predetermined value.

14. A target determination method executable by a computer to perform a process, the process comprising:
acquiring a detection result obtained by tracking, between frames, a two-dimensional position of a person estimated to be the same person, the two-dimensional position being a two-dimensional position of the person in each frame of a video captured by each of a plurality of cameras that capture a predetermined capturing range from a plurality of different viewpoints;
specifying a three-dimensional position of the person based on the two-dimensional position of the person indicated by the detection result and camera parameters of each of the plurality of cameras; and
determining, as a person that is a recognition target, a person for which a speed of the three-dimensional position of the person, corresponding to a change in each of the two-dimensional positions of the person in a plurality of frames, is within a speed range determined in advance.

15. A target determination program executable by a computer to perform a process, the process comprising:
acquiring information obtained by tracking, between frames, a two-dimensional position of a person estimated to be the same person, the two-dimensional position being a two-dimensional position of the person in each frame of a video captured by each of a plurality of cameras that capture a predetermined capturing range from a plurality of different viewpoints;
specifying a three-dimensional position of the person based on the acquired two-dimensional position of the person and camera parameters of each of the plurality of cameras; and
determining, as a person that is a recognition target, a person who first enters a start region, determined in advance as a three-dimensional region at which a person who performs a specific action is present at a start of the specific action, based on the specified three-dimensional position of the person.

16. The target determination program according to claim 15, wherein the start region is at a height equal to or more than a predetermined value from a floor surface.

17. The target determination program according to claim 15 or 16, wherein a person for which the specified three-dimensional position of the person is present within a range of a height determined in advance according to the specific action, during the specific action, is determined to be the person that is the recognition target.

18. The target determination program according to claim 15 or 16, wherein a person for which a distance between a line at which there is a high probability that the person who performs the specific action is present during the specific action, and the specified three-dimensional position of the person, is less than a predetermined value is determined to be the person that is the recognition target.

19. The target determination program according to claim 15 or 16, wherein a person for which a speed of the three-dimensional position of the person, corresponding to a change in each of the two-dimensional positions of the person in a plurality of frames, is within a speed range determined in advance is determined to be the person that is the recognition target.

20. A target determination device, comprising:
an acquisition unit that acquires information obtained by tracking, between frames, a two-dimensional position of a person estimated to be the same person, the two-dimensional position being a two-dimensional position of the person in each frame of a video captured by each of a plurality of cameras that capture a predetermined capturing range from a plurality of different viewpoints;
a specifying unit that specifies a three-dimensional position of the person based on the acquired two-dimensional position of the person and camera parameters of each of the plurality of cameras; and
a determination unit that determines, as a person that is a recognition target, a person who first enters a start region determined in advance as a three-dimensional region at which a person who performs a specific action is present at a start of the specific action, based on the specified three-dimensional position of the person.
